# EUROPEAN PATENT SPECIFICATION

(11) **EP 1 447 156 B1**
(45) Date of publication and mention of the grant of the patent: **26.04.2006**
(21) Application number: 04075316.2
(22) Date of filing: 03.02.2004
(51) Int. Cl.: B21D 43/11, B21D 43/00

(54) **Manipulator for the movement of metal sheets on a work plane of a punching machine**
Manipulator zum Verstellen von Metallblechen auf einer Arbeitsebene einer Stanzmaschine
Manipulateur pour le déplacement de tôles métalliques sur un plan de travail d'une poinçonneuse

(30) Priority: 11.02.2003 IT MI20030242
(43) Date of publication of application: 18.08.2004
(73) Proprietor: SALVAGNINI ITALIA S.p.A., 36040 Sarego (VI) (IT)
(72) Inventor: Venturini, Gianfranco, 37044 Cologna Veneta (VR) (IT); Dal Monte, Nicola, 36045 Lonigo (VI) (IT)
(74) Representative: Mittler, Enrico

(56) References cited:
- EP-A- 0 865 846
- EP-A- 0 920 933
- US-A- 4 274 801

## Description

The present invention concerns a manipulator for the movement of metal sheets on a work plane of a punching machine in accordance with the preamble of claim 1 (see EP-A-0 865 846).

There are known manipulator for punching machines, generally Cartesian, provided with fixed pincers or re-positionable (as regards their support) generally outside of the working cycle, possibly retractable from the edge being held.

Two are the main disadvantages of said known manipulators for punching machines:
a) during the cycle an interference between one or more pincers and the operating head can occur, when one must perform a punching working in a zone of the sheet comprised in or adjacent the volume of the pincers;
b) the completion of the working of the sheet is not possible, when this is longer than the maximum usable stroke of the carriage that supports the pincers.

These two deficiencies require to introduce, during the working, "recovery" operations, which consist in the repositioning of the pincers with respect to the piece, by the aid of organs that keep the piece steady in order to allow the pincers to let go of the hold and to close again in a new position as regards the sheet. The recoveries cause waste of time and worsen the precision of the working of the machine

In view of this state of the art, object of the present invention is to provide a manipulator for punching machine that prevents wastes of time in order to carry out said recoveries

According to the invention such object is attained with a manipulator for punching machine as disclosed in claim 1.

By means of independently controlled carriages, which can move both independently and integrally (the ones in motion in the same direction), the object to prevent to waste time in order to carry out the recoveries is thus attained.

In particular by means of said manipulator it is possible:
a) to execute punchings in zones of the metal sheets that are adjacent the holding pincers;
b) to complete workings of metal sheets longer than a maximum usable stroke of the single carriage that supports the pincers

These and other characteristics of the present invention will be made more evident by the following detailed description of an embodiment thereof illustrated as a non limiting example in the drawings enclosed, in which:
Figure 1 shows the general axonometry of a manipulator according to the invention applied to a punching machine;
Figure 2 shows in plan the same manipulator in the position of the starting of the working;
Figures 3-4 show the way in which a pincers-tools interference is prevented during one working of a strip of sheet near the pincers;
Figures 5-9 show a complete working sequence of a metal sheets with length greater than the maximum workable with an available stroke of the same manipulator;
Figures 10-11 show a possible way to make the two carriages integral when they are in nearby position.

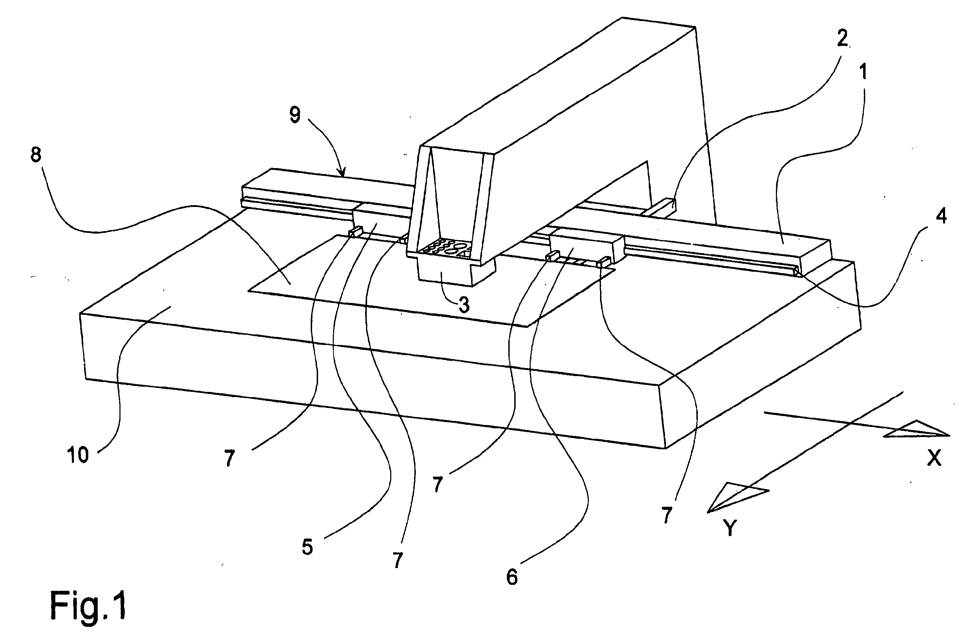

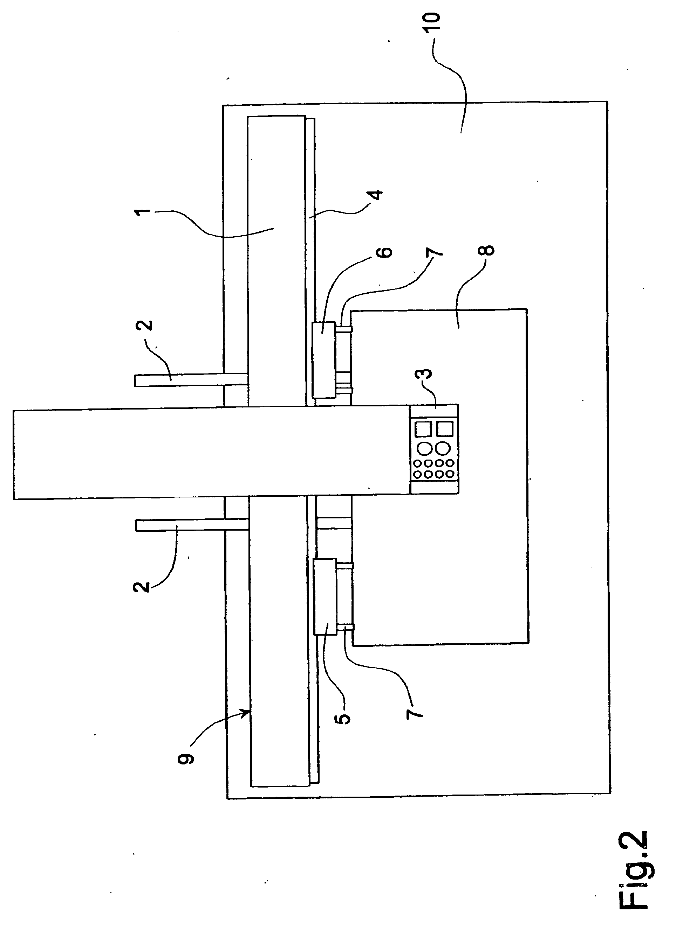

In Figures 1-2 a manipulator 9 for punching machine provided with operating head 3 is shown. The manipulator 9 comprises a carriage 1 provided with a guide 4 on which carriages 5-6 provided with pincers 7 slide for the hold of a metal sheets 8 resting on a work plane 10. The motion of the carriages 1, 5-6, as also the opening/closing of the pincers 7, is governed by a control system with numerical control not shown in the drawings.

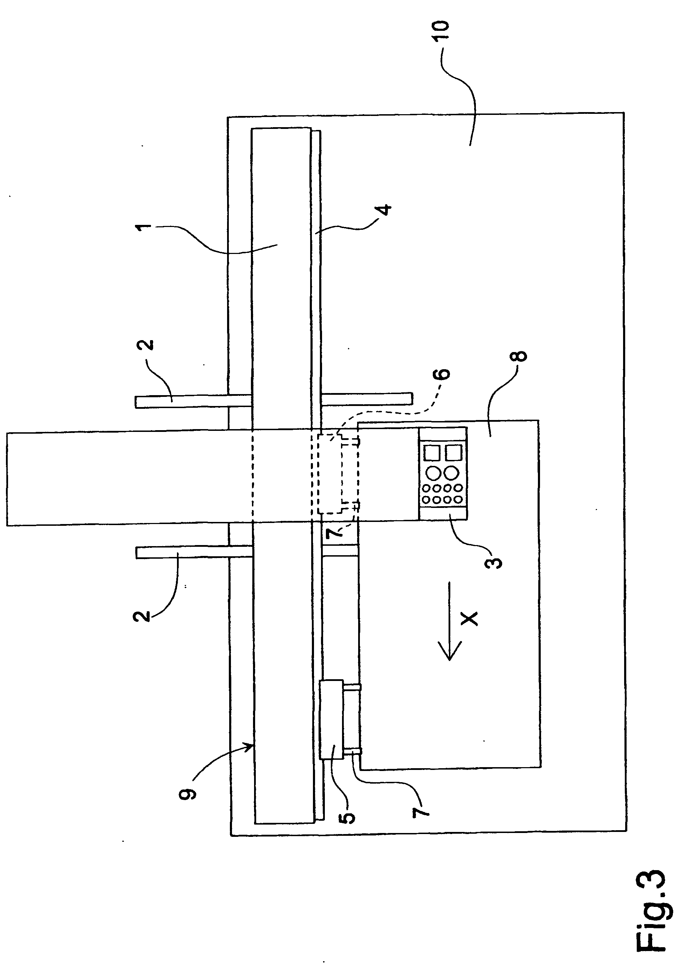

In Figure 3 the sliding motion is shown in the direction X of the carriages 5-6 in order to allow with the operating head 3 to execute punchings near the short side of the metal sheets 8.

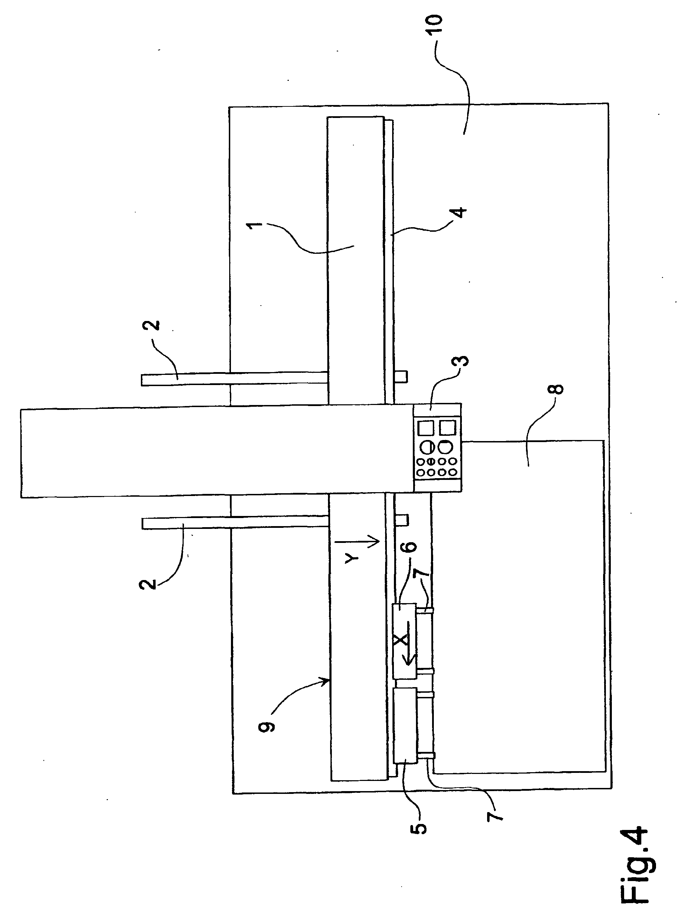

In figure 4 an additional motion of carriage 6 in the direction X along the guide 4 and of the carriage 1 in the direction Y along the guide 2 is shown. The head 3 is as a result above a zone of the sheet 8 that was initially taken by the pincers 7 of the carriage 6, and now ready for a punching working.

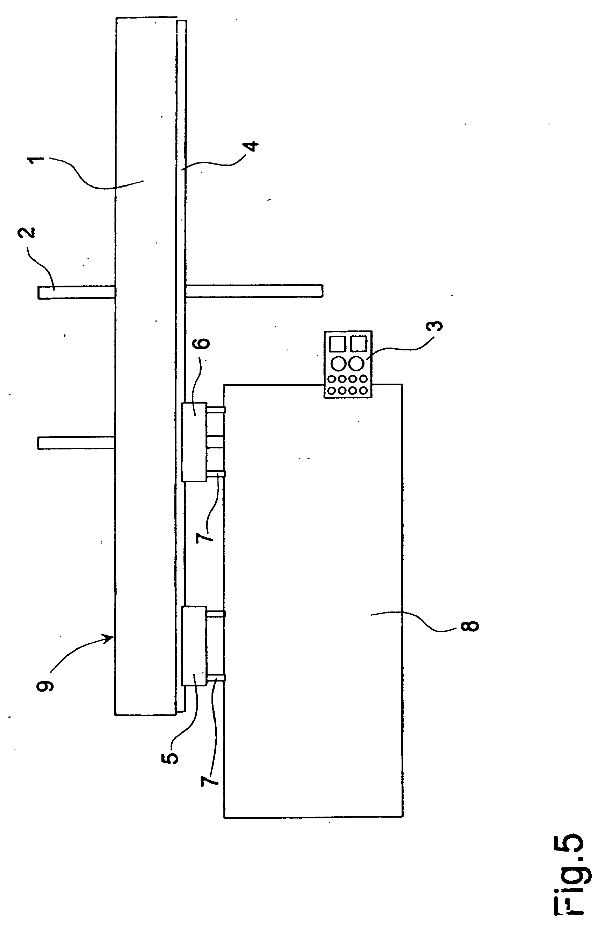

In Figure 5 the position of a metal sheets 8 held by the carriages 5-6 in Figure 3 and having one length greater than the maximum usable stroke of a single carriage 5-6 is shown.

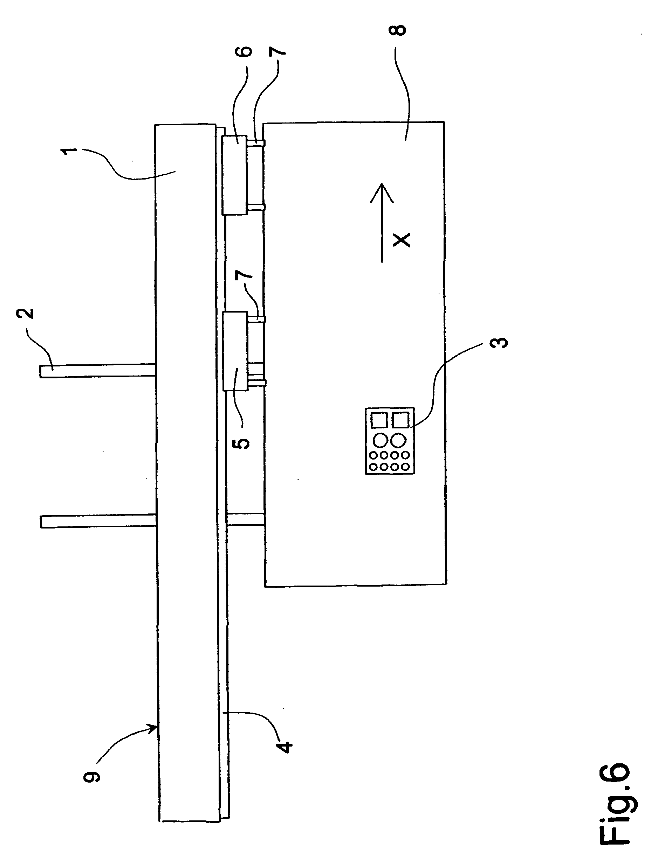

In Figure 6 the movement of the sheet 8 from the position in Figure 5 when the carriages 5-6 move in synchronised way along the guide 4 is shown.

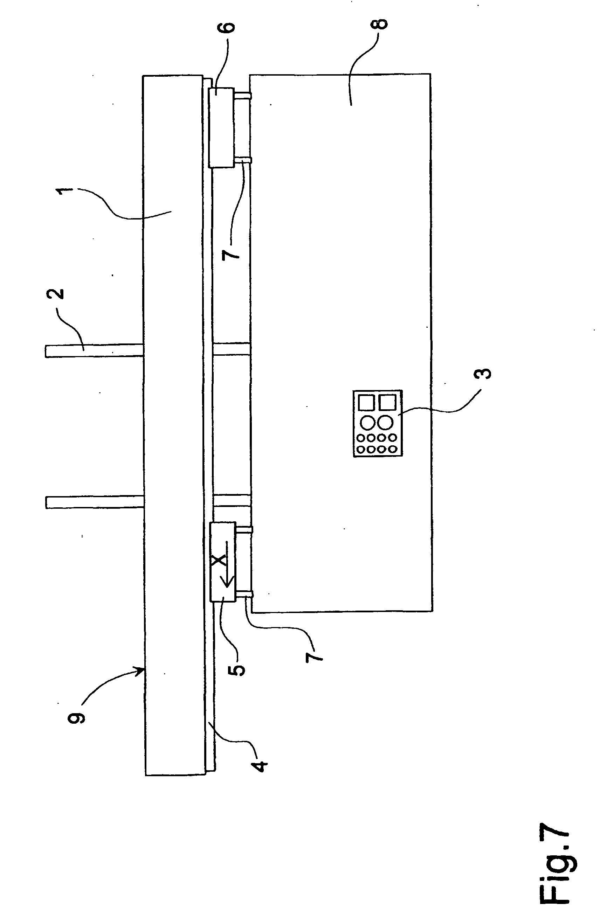

In Figure 7 the movement of the carriage 5 along the guide 4 toward one end of the sheet 8 is shown.

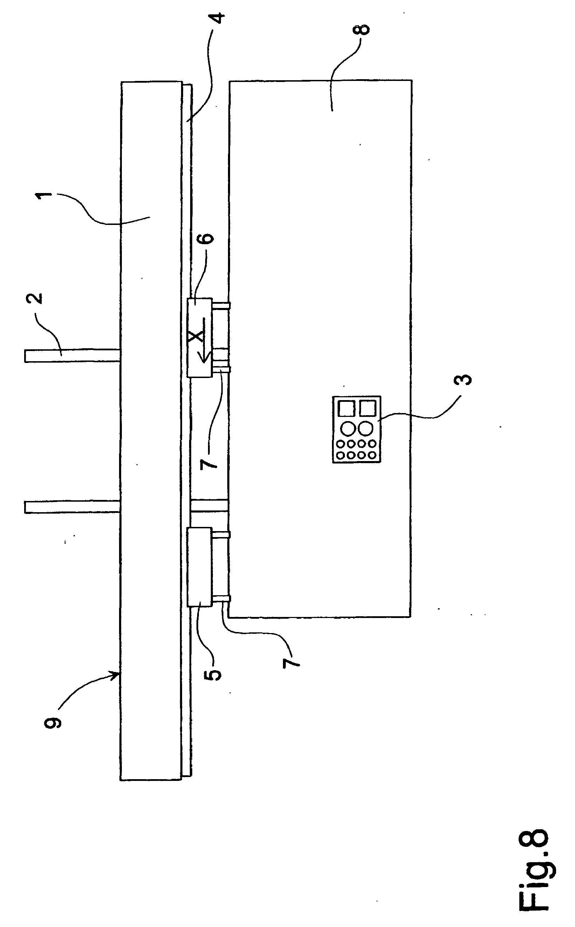

In Figure 8 the movement of the carriage 6 along the guide 4 toward the other carriage 5 is shown.

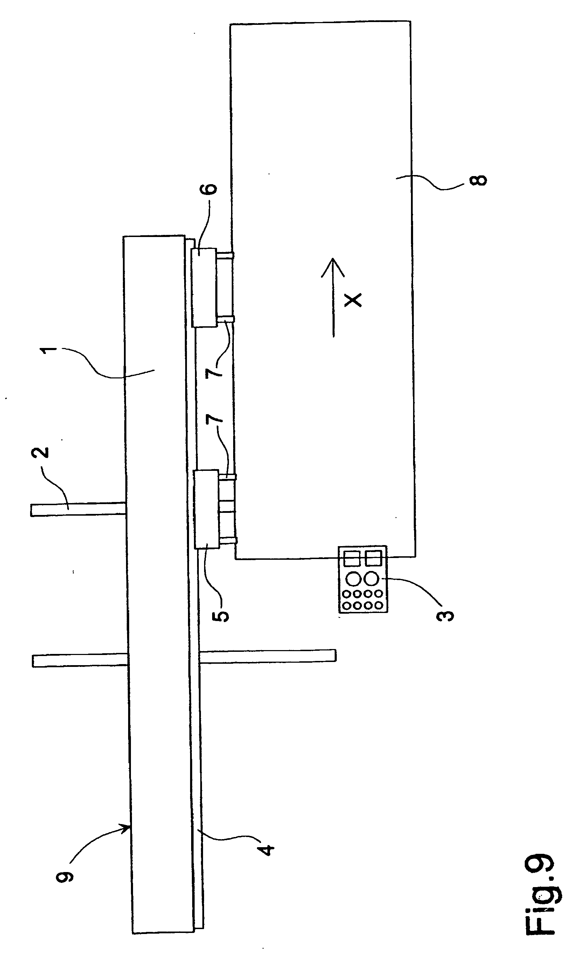

Finally in figure 9 the integral motion of the carriages 5-6 is shown that allows, through the pincers 7, to slide the sheet 8 as regards the position in Figure 8.

In the final position of Figure 9 the operating head 3 can work in a zone of the sheet 8 opposite to the initial position of Figure 6.

Summing up, during the working, the pincers 7 of one of the two carriages 5-6 let go of their hold of the edge of the sheet 8, and the carriage moves, relatively to the other one, so as to reach the new position of hold. Once the new position is reached, the pincers 7 close again. This operation can be carried out both with sheet in motion as well as with steady sheet, in which case the precision of working is as a result certainly improved.

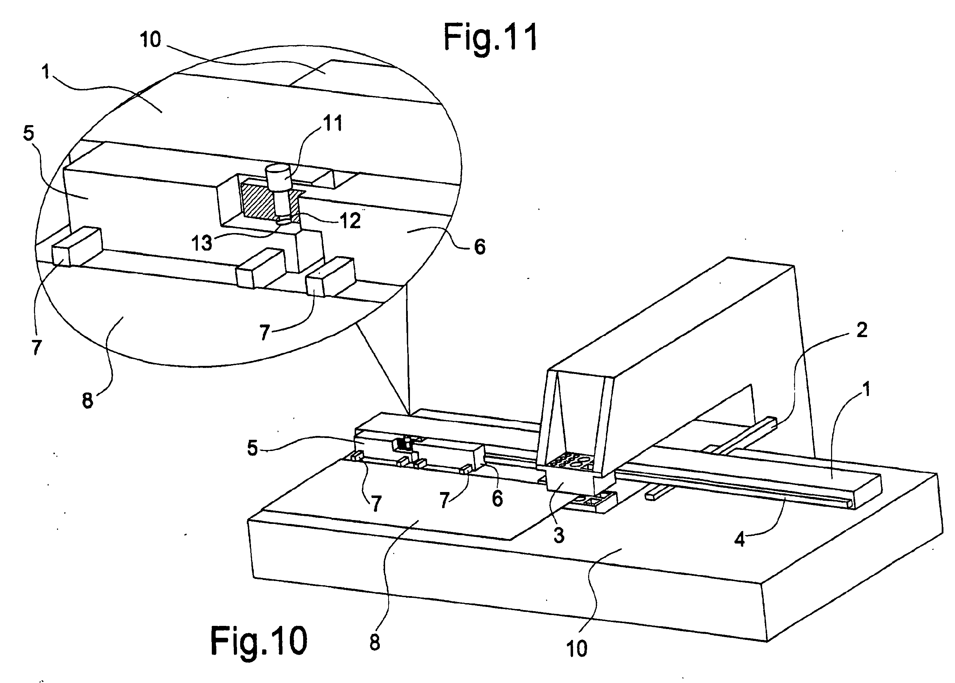

The two carriages 5-6, when they are in nearby position, can be made integral with each other, for instance by means of a peg 11 that gets inserted, possibly in automatic way, into lined up holes 12-13 of the two carriages 5-6, as shown in Figures 10-11.

## Claims

1. Manipulator for the movement of metal sheets (8) on a work plane (10) of a punching machine, the manipulator comprising mobile pincer holder carriages (5-6) each one of which avails of its own control system suitable to impart to the same carriage (5-6) movements with predefined accelerations, speeds and amplitudes of movement, whereby said carriages are mobile in a first direction (X), **characterised in that** said carriages (5-6) are mobile in said first direction along a first guide (4) that is fastened to an edge of an additional carriage (1) mobile in a second direction (Y) along a second guide (2).

2. Manipulator according to claim 1, **characterised in that** said carriages (5-6), when in near by position, can be made integral with each other by means of a peg (11) engaged in lined up holes (12-13) of said carriages (5-6).

## Patentansprüche

1. Manipulator zur Bewegung von Metallblechen (8) auf einer Arbeitsebene (10) einer Stanzmaschine, wobei der Manipulator bewegliche Zangenhalterschlitten (5 - 6) aufweist, welche jeweils ein eigenes Steuersystem haben, welches derart beschaffen und ausgelegt ist, dass den jeweils zugeordneten Schlitten (5 - 6) Bewegungen mit vorbestimmten Beschleunigungen, Geschwindigkeiten und Bewegungswegen erteilt werden, wodurch die Schlitten in eine erste Richtung (X) bewegbar sind, **dadurch gekennzeichnet, dass** die Schlitten (5 - 6) in der ersten Richtung längs einer ersten Führung (4) beweglich sind, welche fest mit einem Rand eines zusätzlichen Schlittens (1) verbunden ist, welcher in eine zweite Richtung (Y) längs einer zweiten Führung (2) beweglich ist.

2. Manipulator nach Anspruch 1, **dadurch gekennzeichnet, dass** dann, wenn die Schlitten (5- 6) in einer nahe beieinander liegenden Position sind, diese integral miteinander mittels eines Zapfens (11) verbunden werden können, welcher in hierzu fluchtenden Öffnungen (12 - 13) der Schlitten (5 - 6) eingreift.

## Revendications

1. Manipulateur pour le déplacement de tôles (8) sur un plan de travail (10) d'une machine à poinçonner, le manipulateur comprenant des chariots à tenailles mobiles (5-6) dont chacun dispose de son propre système de commande adapté pour imprimer au même chariot (5-6) des mouvements ayant des accélérations, des vitesses et des amplitudes de mouvement prédéfinies, grâce à quoi lesdits chariots sont mobiles dans une première direction (X), **caractérisé en ce que** lesdits chariots (5-6) sont mobiles dans ladite première direction le long d'une première glissière (4) qui est fixée à un bord d'un chariot supplémentaire (1) mobile dans une deuxième direction (y) le long d'une deuxième glissière (2).

2. Manipulateur selon la revendication 1, **caractérisé en ce que** lesdits chariots (5-6), lorsqu'ils sont en position proche, peuvent être solidarisés entre eux au moyen d'un taquet (11) engagé dans des trous alignés (12-13) desdits chariots (5-6).
